(19) Europäisches Patentamt
European Patent Office
Office européen des brevets

(11) **EP 3 633 345 A1**

(12) **EUROPÄISCHE PATENTANMELDUNG**

(43) Veröffentlichungstag:
**08.04.2020 Patentblatt 2020/15**

(51) Int Cl.:
***G01N 11/08*** *(2006.01)*

(21) Anmeldenummer: **19197241.3**

(22) Anmeldetag: **13.09.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **05.10.2018 DE 102018124585**

(71) Anmelder: **Atlas Copco IAS GmbH**
**75015 Bretten (DE)**

(72) Erfinder:
• **Mittag Dr., Sten**
**76137 Karlsruhe (DE)**
• **Kirigo, Duncan**
**75038 Oberderdingen (DE)**

(74) Vertreter: **Patentanwälte Bregenzer und Reule Partnerschaftsgesellschaft mbB**
**Rheinstraße 19**
**76532 Baden-Baden (DE)**

(54) **VORRICHTUNG UND VERFAHREN ZUR MESSUNG DER VISKOSITÄT EINES VISKOSEN MATERIALS**

(57) Die Erfindung betrifft eine Vorrichtung (10) zur Messung der Viskosität ($\eta$) eines viskosen Materials mit einem von einem Materialeinlass (16) zu einem Materialauslass (18) verlaufenden Messrohr (14), das eine sich in einer Rohrlängsrichtung erstreckende Längsmittelachse und einen über eine Messstrecke konstanten Querschnitt aufweist, mit am Materialeinlass (16) angeordneten Anschlussmitteln (20) zum Anschließen des Messrohrs (14) an eine Fördereinrichtung zum Fördern des viskosen Materials und mit einem ersten Drucksensor (26) zur Messung des Drucks im Messrohr (14), der am Anfang (22) der Messstrecke und in einem entlang der Längsmittelachse gemessenen ersten Abstand zum Materialauslass (18) angeordnet ist.

Fig.1

**Beschreibung**

Die Erfindung betrifft eine Vorrichtung und ein Verfahren zur Messung der Viskosität eines viskosen Materials.

Viskose Materialien wie beispielsweise Klebstoffe, Dämmstoffe, Dichtstoffe oder Wärmeleitpasten werden bei der Herstellung von Kraftfahrzeugen regelmäßig automatisiert auf Werkstücke wie Karosseriebauteile aufgetragen. Dabei wird das viskose Material mittels einer Fördereinrichtung aus einem Vorratsbehälter zu einer Auftragseinrichtung gefördert, die es in der gewünschten Weise dosiert und über eine Auftragsdüse an das zu bearbeitende Werkstück abgibt, beispielsweise in Form eines Materialstrangs mit definiertem Querschnitt oder in Form von Materialpunkten mit definierter Materialmenge. Das Auftragsverhalten ist jedoch stark abhängig von der Viskosität des Materials. Zwar werden vom Hersteller regelmäßig Werte zur Viskosität geliefert. Meist wird aber nur ein Messwert für eine vom Hersteller durchgeführte Standardmessung angegeben. Bei anderer Düsengeometrie, Leitungsgeometrie, Temperatur und weiteren unterschiedlichen Betriebsbedingungen kann sich die Viskosität jedoch deutlich ändern. Es ist zudem Stand der Technik, die Viskosität eines viskosen Materials vor Ort zu bestimmen, indem mit konstanter Geschwindigkeit eines Förderkolbens das Material durch eine Düsengeometrie gepresst wird und die Düsengeometrie zur Durchführung unterschiedlicher Messungen variiert wird. Diese Methode ist jedoch aufwendig.

Es ist daher Aufgabe der Erfindung, eine Vorrichtung und ein Verfahren zur Messung der Viskosität eines viskosen Materials zur Verfügung zu stellen, die bzw. das leicht handhabbar ist.

Diese Aufgabe wird erfindungsgemäß durch eine Vorrichtung mit den Merkmalen des Anspruchs 1 und ein Verfahren mit den Merkmalen des Anspruchs 8 gelöst. Vorteilhafte Weiterbildungen der Erfindung sind Gegenstand der abhängigen Ansprüche.

Der Erfindung liegt der Gedanke zugrunde, dass die Viskosität η die Ableitung der Schubspannung nach der Scherrate ist, wobei die Schubspannung eine Funktion des im Messrohr zwischen dem Anfang und dem Ende der Messstrecke gemessenen Druckunterschieds ist, während die Scherrate $\dot{\gamma}$ eine Funktion des Durchmessers des Messrohrs und des Volumenstroms ist. Somit müssen nur möglichst viele unterschiedliche Werte des Volumenstroms eingestellt werden, so dass aus den im Messrohr zwischen dem Anfang und dem Ende der Messstrecke bestimmten Werten für die Druckdifferenz Δp und den zugehörigen vorgegebenen Werten des Volumenstroms V die Viskosität errechnet werden kann. Eine solche Messung ist wesentlich einfacher durchzuführen, als für einen konstanten Volumenstrom V die Düsengeometrie zu variieren, indem das Messgerät mechanisch umgerüstet wird.

Das Messrohr weist zu diesem Zweck einen Materialeinlass auf, an dem Anschlussmittel zum Anschließen des Messrohrs an eine Fördereinrichtung angeordnet sind, sowie einen Materialauslass. Zwischen dem Materialeinlass und dem Materialauslass befindet sich eine Messstrecke, die einen konstanten und vorzugsweise kreisrunden Querschnitt aufweist. Am Anfang der Messstrecke ist ein Drucksensor zur Messung des Drucks im Messrohr angeordnet. Der Anfang der Messstrecke befindet sich zudem in einem entlang der Längsmittelachse des Messrohrs gemessenen ersten Abstand zum Materialauslass. Zur Messung der Viskosität wird der Volumenstrom nacheinander auf mehrere vorgegebene Werte eingestellt. Für jeden der vorgegebenen Werte des Volumenstroms wird eine Druckdifferenz im Messrohr zwischen dem Anfang der Messstrecke und dem Ende der Messstrecke bestimmt. Die Viskosität des viskosen Materials wird mittels einer Datenverarbeitungseinrichtung aus der für die jeweiligen vorgegebenen Werte des Volumenstroms ermittelten Werte der Druckdifferenz und den jeweils zugehörigen vorgegebenen Volumenstrom errechnet. Dabei kann näherungsweise so vorgegangen werden, dass die Viskosität als Änderung der eine Funktion der Druckdifferenz darstellenden Schubspannung geteilt durch eine Änderung der eine Funktion des Volumenstroms darstellenden Scherrate ist. Wenn genügend Wertepaare von Druckdifferenz und Volumenstrom, basierend auf einer Vielzahl von unterschiedlich eingestellten Werten des Volumenstroms, vorliegen, kann die Viskosität als Ableitung der Schubspannung nach der Scherrate berechnet werden. Dabei wird jeweils die Scherrate des viskosen Materials an der Wand des Messrohrs herangezogen. Diese kann, wenn das Messrohr über die Länge der Messstrecke einen kreisrunden Querschnitt aufweist, vorteilhaft als

$$\dot{\gamma} = \frac{4}{\pi \cdot R^3} \cdot \dot{V}$$

berechnet werden, wobei R der Innenradius des Messrohrs im Bereich der Messstrecke ist. Zudem kann die Schubspannung vorteilhaft als

$$\tau = \frac{\Delta p \cdot R}{2 \cdot L}$$

berechnet werden, wobei R der Innenradius des Messrohrs im Bereich der Messstrecke und L die entlang der Längsmittelachse des Messrohrs gemessene Länge der Messstrecke ist.

Es ist möglich, dass der Anfang der Messstrecke mit dem Materialeinlass zusammenfällt oder sich kurz hinter dem Materialeinlass befindet, so dass der erste Drucksensor am Materialeinlass oder nahe zum Materialeinlass angeordnet werden kann. Desweiteren ist es möglich, dass das Ende der Messstrecke mit dem Materialauslass zusammenfällt oder sich kurz vor dessen Ende befindet. In diesem Fall ist es möglich, den Druck am Ende der Messstrecke näherungsweise als Atmosphärendruck anzunehmen, so dass am Ende der Messstrecke kein zweiter Drucksensor angeordnet werden muss. Genauere Messungen sind aber möglich, wenn ein zweiter Drucksensor zur Messung des Drucks im Messrohr angeordnet ist, der am Ende der Messstrecke und in einem entlang der Längsmittelachse gemessenen zweiten Abstand zum Materialauslass angeordnet ist. Wenn das Ende der Messstrecke mit dem Materialauslass zusammenfällt, ist der zweite Abstand Null.

Um eine temperaturabhängige Messung vorzunehmen kann zudem im Messrohr und vorzugsweise in der Messstrecke ein Temperatursensor angeordnet sein. Es wird zudem bevorzugt, dass die Längsmittelachse des Messrohrs einen gekrümmten und insbesondere einen schraubenförmigen Verlauf aufweist, so dass bei nur geringer Größe der Messvorrichtung das Messrohr eine große Länge aufweisen kann. Zudem wird bevorzugt, dass das Messrohr in einem Gehäuse aufgenommen ist.

Im Folgenden wird die Erfindung anhand des in der Zeichnung schematisch dargestellten Ausführungsbeispiels näher erläutert. Es zeigt

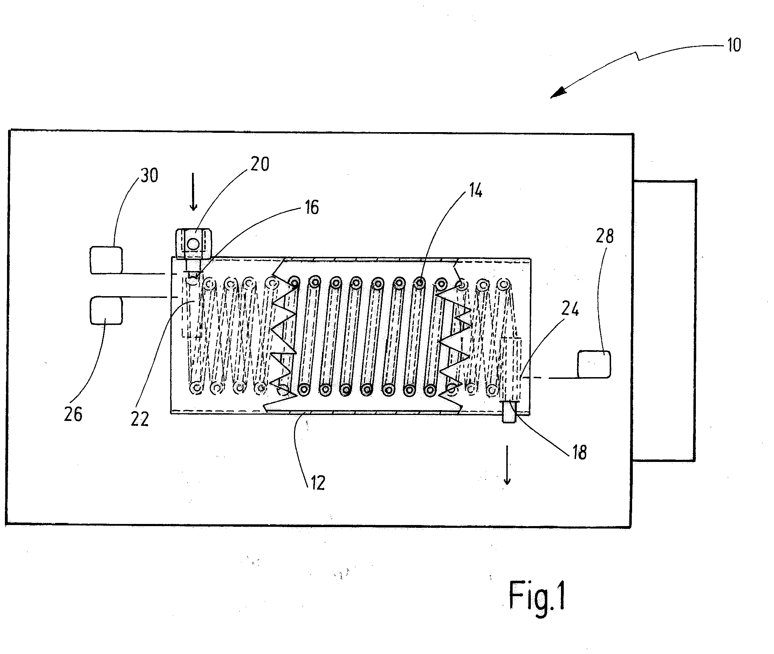

Fig. 1    eine Vorrichtung zur Messung der Viskosität eines viskosen Materials in schematischer Darstellung.

Die in der Zeichnung schematisch dargestellte Messvorrichtung 10 weist ein Gehäuse 12 auf, in dem ein Messrohr 14 aufgenommen ist. Das Messrohr 14 erstreckt sich von einem Materialeinlass 16 bis zu einem Materialauslass 18 und weist einen konstanten, kreisrunden Querschnitt mit einem Innendurchmesser R auf. Am Materialeinlass 16 sind Anschlussmittel 20 angeordnet, mit denen das Messrohr 14 an eine Fördereinrichtung zum druckbeaufschlagten Fördern von viskosem Material angeschlossen werden kann. In der Rohrlängsrichtung des Messrohrs 14 erstreckt sich eine Längsmittelachse, die sich in jedem Querschnitt des Messrohrs 14 durch dessen Mittelpunkt erstreckt und über die gesamte Länge des Messrohrs 14 einen schraubenförmigen Verlauf aufweist.

Das Messrohr 14 weist eine Messstrecke auf, deren Anfang 22 in einem entlang der Längsmittelachse gemessenen ersten Abstand zum Materialauslass 18 angeordnet ist und dessen Ende 24 in einem entlang der Längsmittelachse gemessenen zweiten Abstand zum Materialauslass 18 angeordnet ist. Am Anfang 22 der Messstrecke befindet sich ein erster Drucksensor 26, der an dieser Stelle den Druck im Messrohr 14 misst, während sich am Ende 24 der Messstrecke ein zweiter Drucksensor 28 befindet, der an dieser Stelle den Druck im Messrohr 14 misst. Zudem befindet sich nahe des Materialeinlasses 16 noch ein Temperatursensor 30, der die Temperatur im Messrohr 14 misst.

Zur Messung der Viskosität η eines viskosen Materials wird die Messvorrichtung 10 mit dem Anschlussmittel 20 an eine Fördereinrichtung angeschlossen, welche druckbeaufschlagt das viskose Material durch das Messrohr 14 leitet. Dabei wird der Volumenstrom V nacheinander auf mehrere vorgegebene Werte eingestellt.

Zu jedem der vorgegebenen Werte des Volumenstroms V wird die Druckdifferenz Δp mittels der Drucksensoren 26, 28 gemessen. Aus den Wertepaaren der vorgegebenen Volumenströme V und der zu den Volumenströmen V jeweils gehörenden, gemessenen Druckdifferenzen Δp wird die Viskosität η mittels einer Datenverarbeitungseinrichtung berechnet.

Zu diesem Zweck wird der Volumenstrom V auf eine Vielzahl von vorbestimmten Werten eingestellt und zu jedem dieser Werte wird die Druckdifferenz Δp gemessen. Aus jeder Druckdifferenz Δp kann die Schubspannung τ des viskosen Materials als $\tau = \dfrac{\Delta p \cdot R}{2 \cdot L}$ berechnet werden, wobei L die entlang der Längsmittelachse des Messrohrs 14 gemessene Länge der Messstrecke zwischen deren Anfang 22 und deren Ende 24 ist. Aus den vorgegebenen Werten, auf die der Volumenstrom $\dot V$ eingestellt wird, kann jeweils die Scherrate $\dot \gamma$ des viskosen Materials an der Wand des Messrohrs 14 als $\dot \gamma = \dfrac{4}{\pi \cdot R^3} \cdot \dot V$ berechnet werden. Die Viskosität η errechnet sich dann als Ableitung der Schubspannung τ nach der Scherrate $\dot \gamma$ als $\eta = \dfrac{\delta \tau}{\delta \dot \gamma}$.

Zusammenfassend ist folgendes festzuhalten: Die Erfindung betrifft eine Vorrichtung 10 zur Messung der Viskosität η eines viskosen Materials mit einem von einem Materialeinlass 16 zu einem Materialauslass 18 verlaufenden Messrohr 14, das eine sich in einer Rohrlängsrichtung erstreckende Längsmittelachse und einen über eine Messstrecke konstanten Querschnitt aufweist, mit am Materialeinlass 16 angeordneten Anschlussmitteln 20 zum Anschließen des Messrohrs 14 an eine Fördereinrichtung zum Fördern des viskosen Materials und mit einem ersten Drucksensor 26 zur Messung des Drucks im Messrohr 14, der am Anfang 22 der Messstrecke und in einem entlang der Längsmittelachse gemessenen ersten Abstand zum Materialauslass 18 angeordnet ist.

**Patentansprüche**

1.   Vorrichtung zur Messung der Viskosität (η) eines viskosen Materials mit einem von einem Materialeinlass (16) zu einem Materialauslass (18) verlaufenden Messrohr (14), das eine sich in einer Rohrlängsrichtung erstreckende Längsmittelachse und einen über eine Messstrecke konstanten Querschnitt aufweist, mit am Materialeinlass (16) angeordneten Anschlussmitteln (20) zum Anschließen des Messrohrs (14) an eine Fördereinrichtung zum Fördern des viskosen Materials und mit einem ersten Drucksensor (26) zur Messung des Drucks im Messrohr (14), der am Anfang (22) der Messstrecke und in einem entlang der Längsmittelachse gemessenen ersten Abstand zum Materialauslass (18) angeordnet ist.

2.   Vorrichtung nach Anspruch 1, **dadurch gekenn-**

**zeichnet, dass** der Anfang (22) der Messstrecke mit dem Materialeinlass (16) zusammenfällt.

3. Vorrichtung nach Anspruch 1 oder 2, **dadurch gekennzeichnet, dass** das Ende (24) der Messstrecke mit dem Materialauslass (18) zusammenfällt.

4. Vorrichtung nach einem der vorangehenden Ansprüche, **gekennzeichnet durch** einen zweiten Drucksensor (28) zur Messung des Drucks im Messrohr, der am Ende (24) der Messstrecke angeordnet ist.

5. Vorrichtung nach einem der vorangehenden Ansprüche, **gekennzeichnet durch** einen im Messrohr (14) und vorzugsweise in der Messstrecke angeordneten Temperatursensor (30).

6. Vorrichtung nach einem der vorangehenden Ansprüche, **dadurch gekennzeichnet, dass** die Längsmittelachse eine gekrümmten und insbesondere einen schraubenförmigen Verlauf aufweist.

7. Vorrichtung nach einem der vorangehenden Ansprüche, **gekennzeichnet durch** ein Gehäuse (12), in dem das Messrohr (14) aufgenommen ist.

8. Verfahren zur Bestimmung der Viskosität ($\eta$) eines viskosen Materials, wobei das viskose Material von einem Materialeinlass (16) bis zu einem Materialauslass (18) durch ein Messrohr (14) geleitet wird, wobei der Volumenstrom ($\dot{V}$) des viskosen Materials auf mehrere vorgegebene Werte eingestellt wird, wobei für jeden der vorgegebenen Werte des Volumenstroms ($\dot{V}$) ein Wert für eine Druckdifferenz ($\Delta p$) im Messrohr (14) zwischen dem Anfang (22) einer Messstrecke und dem Ende (24) der Messstrecke ermittelt wird, wobei das Messrohr (14) über die Länge der Messstrecke einen konstanten Querschnitt aufweist und wobei die Viskosität ($\eta$) des viskosen Materials mittels einer Datenverarbeitungseinrichtung aus den ermittelten Werten für die Druckdifferenz ($\Delta p$) und den jeweils zugehörigen vorgegebenen Werten für den Volumenstrom ($\dot{V}$) errechnet wird.

9. Verfahren nach Anspruch 8, **dadurch gekennzeichnet, dass** die Viskosität ($\eta$) aus einer Änderung der Schubspannung ($\tau$) des viskosen Materials in Abhängigkeit von einer Änderung der Scherrate ($\dot{\gamma}$) des viskosen Materials an der Wand des Messrohrs (14) berechnet wird, wobei die Schubspannung ($\tau$) eine Funktion der Druckdifferenz ($\Delta p$) und die Scherrate ($\dot{\gamma}$) eine Funktion des Volumenstroms ($\dot{V}$) ist.

10. Verfahren nach Anspruch 9, **dadurch gekenn-**

**zeichnet, dass** die Viskosität ($\eta$) als Ableitung $\dfrac{\delta\tau}{\delta\dot{\gamma}}$ der Schubspannung ($\tau$) nach der Scherrate ($\dot{\gamma}$) des viskosen Materials an der Wand des Messrohrs (14) berechnet wird.

11. Verfahren nach Anspruch 10, **dadurch gekennzeichnet, dass** die Scherrate ($\dot{\gamma}$) des viskosen Materials an der Wand des Messrohrs (14) als

$$\dot{\gamma} = \frac{4}{\pi \cdot R^3} \cdot \dot{V}$$

berechnet wird, wobei das Messrohr (14) über die Länge der Messstrecke einen kreisrunden Querschnitt aufweist und wobei R der Innenradius des Messrohrs (14) im Bereich der Messstrecke ist.

12. Verfahren nach Anspruch 11, **dadurch gekennzeichnet, dass** die Schubspannung ($\tau$) als

$$\tau = \frac{\Delta p \cdot R}{2 \cdot L}$$

berechnet wird, wobei R der Innenradius des Messrohrs (14) im Bereich der Messstrecke und L die entlang der Längsmittelachse des Messrohrs (14) gemessene Länge der Messstrecke ist.

13. Verwendung einer Vorrichtung nach einem der Ansprüche 1 bis 7 zur Durchführung des Verfahrens nach einem der Ansprüche 8 bis 12.

Fig.1

5

Europäisches Patentamt
European Patent Office
Office européen des brevets

# EUROPÄISCHER RECHERCHENBERICHT

**Nummer der Anmeldung**

EP 19 19 7241

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP S61 57833 A (BABCOCK HITACHI KK) 24. März 1986 (1986-03-24) | 1-5,7-13 | INV. G01N11/08 |
| Y | * das ganze Dokument * | 6 | |
| | ----- | | |
| Y | US 4 932 242 A (KAWASHIMA SUMIHIKO [JP] ET AL) 12. Juni 1990 (1990-06-12) * Abbildungen 6,9 * | 6 | |
| | ----- | | |

**RECHERCHIERTE SACHGEBIETE (IPC)**

G01N

Der vorliegende Recherchenbericht wurde für alle Patentansprüche erstellt

| Recherchenort | Abschlußdatum der Recherche | Prüfer |
|---|---|---|
| Den Haag | 13. Februar 2020 | Böhler, Robert |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 19 7241

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-02-2020

| Im Recherchenbericht angeführtes Patentdokument | Datum der Veröffentlichung | Mitglied(er) der Patentfamilie | Datum der Veröffentlichung |
|---|---|---|---|
| JP S6157833 A | 24-03-1986 | KEINE | |
| US 4932242 A | 12-06-1990 | JP S6426123 A | 27-01-1989 |
| | | JP H07119685 B2 | 20-12-1995 |
| | | US 4932242 A | 12-06-1990 |

EPO FORM P0461

Für nähere Einzelheiten zu diesem Anhang : siehe Amtsblatt des Europäischen Patentamts, Nr.12/82